# FASCICULE DE BREVET EUROPEEN

(11) **EP 0 661 794 B1**
(45) Date de publication et mention de la délivrance du brevet: **28.08.1996**
(21) Numéro de dépôt: 94120437.2
(22) Date de dépôt: 22.12.1994
(51) Int. Cl.: H02K 37/12, H02K 21/12

(54) **Transducteur électromécanique cylindrique**
Zylindrischer elektromechanischer Wandler
Cylindrical electromechanical transducer

(30) Priorité: 28.12.1993 FR 9315752
(43) Date de publication de la demande: 05.07.1995
(73) Titulaire: Eta SA Fabriques d'Ebauches, 2540 Grenchen (CH)
(72) Inventeur: Daho, Taghezout, CH-1006 Lausanne (CH)
(74) Mandataire: de Montmollin, Henri

(56) Documents cités:
- CH-A- 262 080
- CH-A- 549 306
- DE-A- 1 613 302
- GB-A- 909 260
- US-A- 3 952 219

## Description

La présente invention concerne des transducteurs électromécaniques présentant une configuration du type cylindrique et pouvant notamment servir de moteurs pas à pas. En particulier, la présente invention concerne des transducteurs électromécaniques ayant un diamètre de l'ordre de quelques centimètres.

De tels transducteurs électromécaniques de petites dimensions et de configuration cylindrique sont utilisés dans diverses applications et en particulier dans les systèmes de télécommunication, dans le domaine de l'audiovisuel, dans le domaine médical, dans la robotique ou encore dans les systèmes de sécurité.

Il est connu du document US 3 952 219 un moteur de configuration cylindrique et comportant trois pièces statoriques longitudinales définissant un arc de cercle centré sur l'axe de rotation du rotor. Les trois pièces statoriques sont maintenues entre deux flasques comportant chacun un trou pour l'arbre du rotor sur lequel est fixé l'aimant permanent. Trois bobines sont montées respectivement sur des premières parties des trois pièces statoriques. D'autres parties de ces pièces statoriques sont situées en regard de l'aimant permanent du rotor. Les pièces statoriques sont positionnées radialement par les tétons prévus aux extrémités des pièces statoriques, ces tétons étant introduits dans des encoches prévus à cet effet dans les deux flasques du moteur.

Ce moteur, bien que d'assemblage relativement aisé, présente un certain nombre de problèmes. Premièrement, l'arbre du rotor traverse longitudinalement le moteur, ce qui est néfaste pour la stabilité de rotation du rotor. En plus, pour effectuer un couplage mécanique avec un dispositif externe, il est nécessaire de rapporter un engrenage sur l'arbre du rotor après l'assemblage du moteur. Ensuite, la forme des pièces polaires engendre un flux de fuite relativement important et l'aimant permanent du rotor n'est pas positionné magnétiquement selon la direction de l'axe de rotation de ce rotor. Il n'y a donc aucun positionnement magnétique axial du rotor. Ensuite, les deux flasques servant au maintien des pièces statoriques ne sont pas solidaires l'un de l'autre. De ce fait, la structure du moteur n'est pas stable, ce qui nuit au rendement de ce moteur.

On connaît également du document DE 1 613 302 un moteur comprenant un rotor à aimant permanent comprenant un bâti formé d'un corps central, un flasque situé à une extrémité du corps central et une partie cylindrique externe s'élevant depuis le bord du flasque. Ce moteur comporte trois pièces statoriques portant chacune une bobine d'alimentation sur une première partie et ayant une deuxième partie située en regard de l'aimant permanent du rotor.

Le moteur comprend en outre un disque de retour du flux magnétique, fixé au corps central à l'aide d'une vis de fixation, et un couvercle de fermeture du logement où est situé l'aimant permanent. Cet aimant permanent est monté sur un arbre dont un premier pivot est agencé dans un palier prévu dans le flasque susmentionné. Cet arbre traverse le couvercle pour permettre la transmission d'un moment de force. Le flasque est situé du côté du corps central relativement à l'aimant permanent du rotor. Trois ouvertures sont prévues dans ce flasque, ces ouvertures étant respectivement traversées par les trois pièces statoriques.

La partie formant l'épanouissement polaire de chacune desdites pièces statoriques est plus éloignée de l'axe central du rotor que la partie sur laquelle est montée la bobine. Cette configuration engendre un mauvais couplage du flux magnétique de la bobine avec le flux magnétique de l'aimant permanent. A nouveau, ce moteur présente un mauvais centrage axial du rotor, celui-ci étant attiré en direction du flasque. Pour maintenir le rotor dans une position axiale prédéterminée, une butée est nécessaire à l'extrémité du pivot engagé dans le palier prévu dans le flasque, ce qui augmente les frottements sur l'arbre du rotor et par conséquent diminue le rendement du motor.

On remarquera que les bobines sont prévues d'un premier côté du flasque alors que les épanouissements polaires et l'aimant permanent du rotor sont agencés de l'autre côté de ce flasque. Les pièces statoriques sont positionnées radialement à l'aide des ouvertures prévues dans le flasque. Cependant, ce motor ne présente pas de moyens de positionnement axial des pièces statoriques. De manière particulièrement désavantageuse, les bobines sont serrées entre le disque de retour du flux magnétique et le flasque. La fixation du disque de retour du flux magnétique engendre un écrasement des bobines et un déplacement longitudinal des pièces statoriques. De plus, les bobines sont apportées une fois les pièces statoriques agencées dans les ouvertures prévues dans le flasque. La construction de ce moteur est donc peu fiable et son assemblage est compliqué. Finalement, on notera que, pour transmettre un couple de force, il est nécessaire de monter un engrenage sur l'arbre du rotor une fois le couvercle assemblé aux pièces statoriques.

Le but de la présente invention est de pallier les inconvénients décrits ci-avant en fournissant un transducteur électromécanique fiable, ayant une configuration cylindrique adaptée pour de petits moteurs et pouvant être réalisé en série pour un faible coût de fabrication.

En conséquence, la présente invention à pour objet un transducteur électromécanique comprenant un stator et un rotor susceptible de tourner autour d'un axe de rotation et comportant un aimant permanent, le stator comprenant des moyens de couplage magnétique servant à coupler magnétiquement au moins une première bobine à l'aimant permanent, ces moyens de couplage magnétique comprenant :
- un premier épanouissement polaire et un deuxième épanouissement polaire définissant chacun partiellement un trou statorique traversé par le rotor, ces premier et deuxième épanouissements polaires étant séparés l'un de l'autre par des zones à haute réluctance magnétique,
- un premier bras polaire et un deuxième bras polaire ayant chacun une première extremité et une seconde extrémité, ces premier et deuxième bras polaires ayant leur dite première extrémité reliée magnétiquement, et respectivement, audit premier épanouissement polaire et audit deuxième épanouissement polaire et ayant leur dite seconde extrémité reliée magnétiquement l'une à l'autre, lesdits premier et deuxième bras polaires étant orientés dans une direction parallèle audit axe de rotation, la première bobine étant portée par le premier bras polaire. Le stator comprend en outre un bâti comportant un corps central allongé ayant un axe central longitudinal confondu avec l'axe de rotation du rotor et comportant également un flasque solidaire du corps central, perpendiculaire à l'axe central longitudinal de celui-ci. Le transducteur selon l'invention est caractérisé en ce que les bras polaires et les épanouissements polaires sont situés en-dessous de la surface supérieure du flasque relativement au corps central, les épanouissements polaires étant en appui axial contre une surface de ce flasque.

Grâce aux caractéristiques de l'invention susmentionnées, l'assemblage du transducteur électromécanique est aisé et les diverses parties polaires peuvent être fixées solidement au bâti de manière à être positionnées axialement et radialement.

Selon une caractéristique particulière de l'invention, les secondes extrémités desdits bras polaires sont reliées magnétiquement à des oreilles de contact magnétique respectives, appartenant aux moyens de couplage magnétique, situées dans un plan perpendiculaire à l'axe de rotation du rotor.

Dans un mode de réalisation particulier, les oreilles de contact magnétique sont reliées magnétiquement entre elles par un anneau de faible réluctance magnétique, appartenant aux moyens de couplage magnétique, disposé en appui contre ces oreilles de contact magnétique. De plus, chacun des bras polaires forme avec l'épanouissement polaire respectif et l'oreille de contact magnétique respective une seule et même pièce polaire.

Selon trois modes de réalisation principaux de l'invention, il est prévu respectivement un transducteur triphasé, un transducteur biphasé et un transducteur monophasé.

D'autres avantages de l'invention seront décrits ci-après à l'aide de la description suivante faite en référence aux dessins annexés, dans lesquels :
- la figure 1 est une vue de côté d'un transducteur électromécanique triphasé selon l'invention;
- la figure 2 est une coupe longitudinale du transducteur électromécanique représenté à la figure 1;
- les figures 3 et 4 sont des vues en coupe du transducteur électromécanique représenté aux figures 1 et 2 respectivement selon les lignes de coupe III-III et IV-IV;
- la figure 5 représente le schéma magnétique du transducteur électromécanique représenté aux figures 1 à 4;
- la figure 6 est une vue de côté d'un transducteur électromécanique biphasé selon l'invention;
- la figure 7 représente le schéma magnétique du transducteur électromécanique représenté à la figure 6;
- la figure 8 est une coupe longitudinale d'un transducteur électromécanique monophasé selon l'invention;
- les figures 9 et 10 sont des vues en coupe du transducteur électromécanique, représenté à la figure 8, respectivement selon les lignes de coupe IX-IX et X-X.

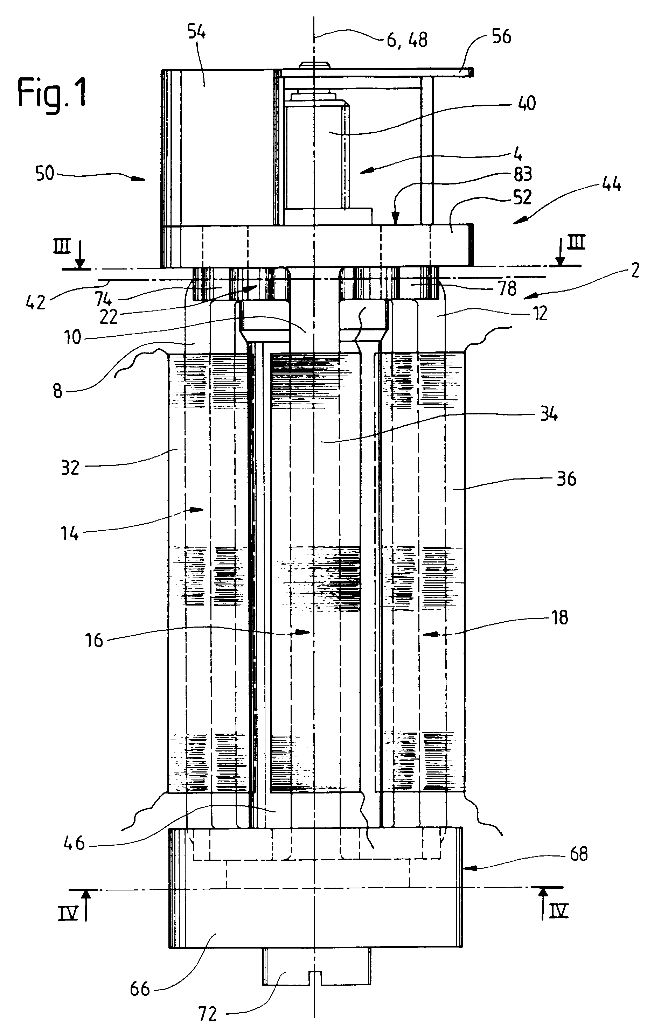

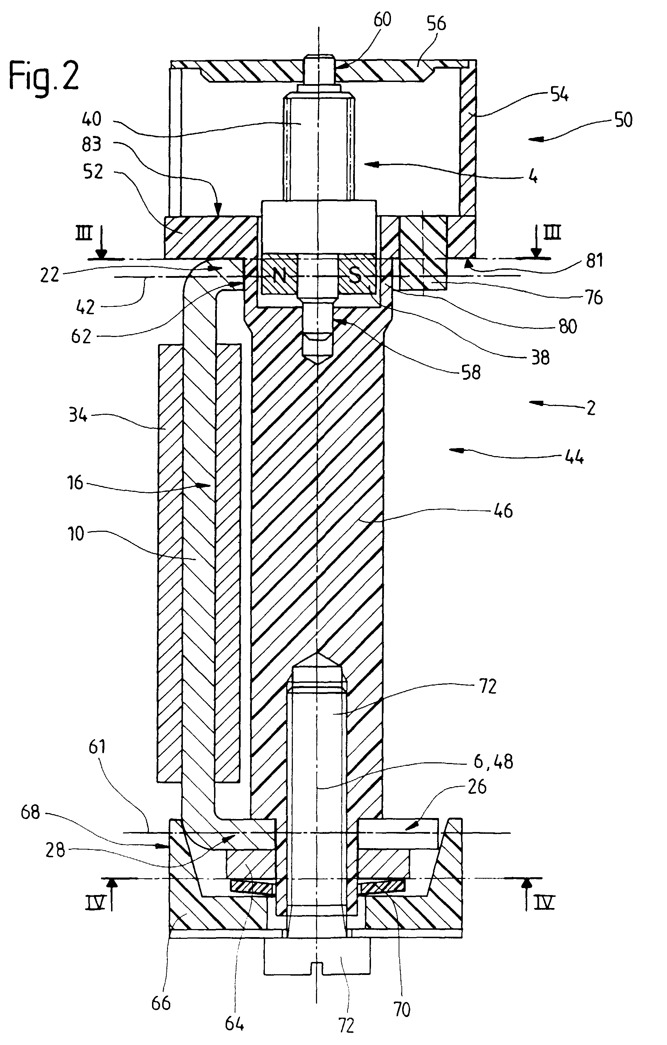

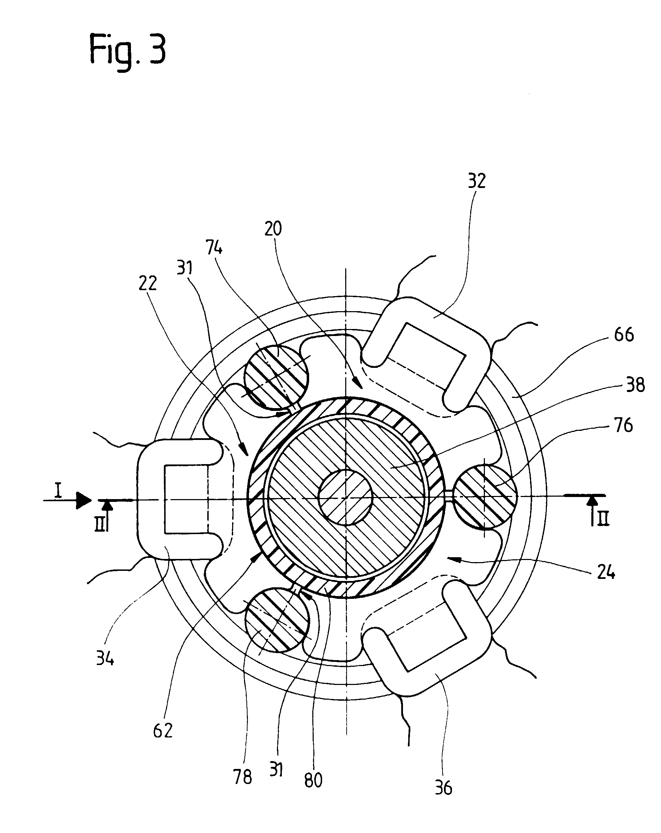

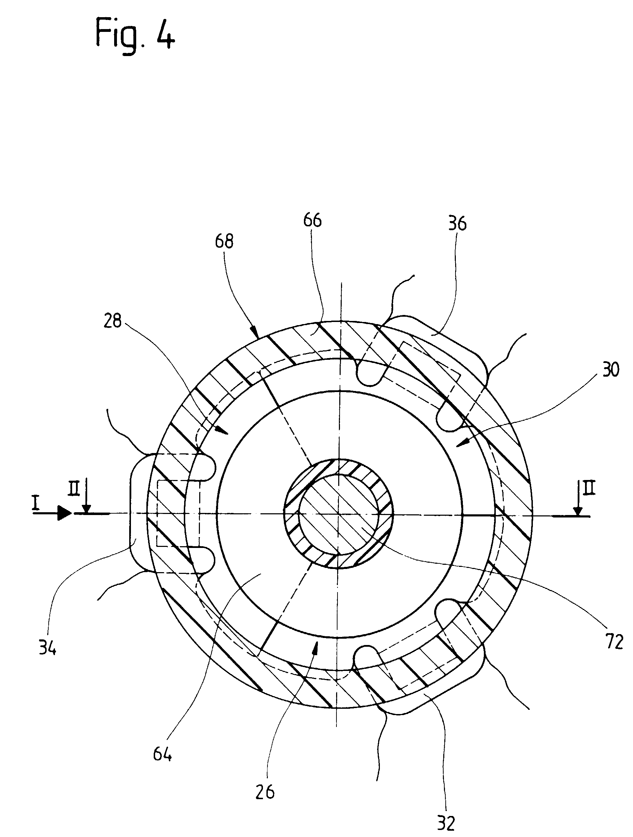

En se référant ci-après aux figures 1 à 5, on décrira un transducteur électromécanique triphasé selon l'invention.

Ce transducteur comprend un stator 2 et un rotor 4 susceptible de tourner autour d'un axe de rotation 6 déterminé relativement au stator 2.

Le stator 2 comporte trois pièces polaires 8, 10 et 12. Chacune des pièces polaires 8, 10 et 12 comprend un bras polaire 14, respectivement 16 et 18, un épanouissement polaire 20, respectivement 22 et 24, et une oreille de contact magnétique 26, respectivement 28 et 30. Les épanouissements polaires 20, 22 et 24 sont séparés l'un de l'autre par des entrefers 31 formant des zones de haute réluctance magnétique et sont décalés angulairement l'un de l'autre d'un angle de 120°.

Les bras polaires 14, 16 et 18 portent respectivement des bobines d'alimentation 32, 34 et 36. Ces bras polaires 14, 16 et 18 sont orientés dans la direction de l'axe de rotation 6 du rotor 4.

Le rotor 4 comporte un aimant permanent bipolaire 38 à aimantation radiale et un engrenage 40 servant à coupler mécaniquement ce rotor 4 à une roue mécanique (non représentée) servant à la transmission d'un moment de force.

Les trois épanouissements polaires 20, 22 et 24 s'étendent dans un même plan 42 perpendiculaire à l'axe de rotation 6.

Le stator 2 comporte également un bâti non-magnétique 44 comprenant un corps central allongé 46 ayant un axe central longitudinal 48 confondu avec l'axe de rotation 6 du rotor 4. Le bâti 44 comprend en outre une cage 50 formée par un flasque 52, une paroi latérale 54 et un couvercle 56. Le flasque 52 et la paroi 54 sont formés en une seule pièce avec le corps allongé central 46.

Le rotor 4 est maintenu en position dans la direction de l'axe de rotation 6 au moyen d'un premier palier 58 agencé dans le corps central allongé 46 et d'un deuxième palier 60 prévu dans le couvercle 56. Dans ce mode de réalisation, l'aimant permanent 38 est situé dans l'ouverture statorique 62 définie par les épanouissements polaires 20, 22 et 24.

Les oreilles de contact magnétiques 26, 28 et 30 sont situées dans un plan 61 perpendiculaire à l'axe de rotation 6 et sont reliées magnétiquement entre elles au moyen d'un anneau 64 de faible réluctance magnétique. On notera ici que les trois oreilles de contact magnétique sont agencées de manière que l'anneau 64 n'est pas indispensable pour assurer le couplage magnétique entre les pièces polaires 8, 10 et 12. Toutefois, sa présence permet de renforcer le couplage magnétique et permet d'augmenter les tolérances d'usinage des pièces polaires 8, 10 et 12.

L'anneau 64 et les pièces polaires 8, 10 et 12 sont assemblés fixement au bâti 44 du stator 2 au moyen d'une base 66 présentant une saillie annulaire 68. De plus, il est prévu un anneau élastique 70 servant à maintenir en appui l'anneau 64 contre les oreilles de contact magnétiques 26, 28 et 30.

La base 66 est fixée au corps central allongé 46 du bâti 44 au moyen d'une vis de fixation 72. De plus, les pièces polaires 8, 10 et 12 sont maintenues solidaires du bâti 44 et positionnées l'une relativement aux deux autres au moyen de goupilles 74, 76 et 78 faisant saillie du flasque 52. Ces goupilles 74, 76 et 78 sont logées dans des encoches prévues à cet effet dans les épanouissements polaires 20, 22 et 24. Le maintien en position fixe des épanouissements polaires 20, 22 et 24 est assuré conjointement par les goupilles 74, 76 et 78 et par une partie annulaire 80 prévue dans le trou statorique 62, cette partie annulaire 80 appartenant au bâti 44 et formant une partie intermédiaire entre le corps allongé central 46 et le flasque 52.

On remarquera que, selon une caractéristique avantageuse de l'invention, le plan 42, dans lequel s'étendent les trois épanouissements polaires 20, 22 et 24, est situé en-dessous de la surface supérieure 83 du flasque 52 relativement au corps central 46. Le flasque 52 sert de butée pour les pièces polaires 8, 10 et 12, les épanouissements polaires 20, 22 et 24 étant en appui contre la surface 81 du flasque 52. Il est également possible de prévoir d'autres variantes dans lesquelles le flasque présente des évidements borgnes où sont logés au moins partiellement les épanouissements polaires. De tels évidements borgnes peuvent être agencés pour positionner les épanouissements polaires de telle sorte que les goupilles 74, 76 et 78 peuvent être alors supprimées.

La partie annulaire 80 sert à relier matériellement le corps central 46 au flasque 52 et également au centrage des épanouissements polaires 20, 22 et 24. Bien que cette partie annulaire 80 augmente légèrement l'entrefer entre les épanouissements polaires, elle joue un rôle important dans la construction du transducteur selon l'invention.

Les pièces polaires peuvent être apportées latéralement lors de l'assemblage, puis amenées en appui contre le flasque 52. Ensuite, la base 66 est apportée contre les pièces polaires et une force axiale est exercée sur ces pièces polaires au moyen de la vis 72 qui est visée dans le bâti 44. Ainsi les pièces polaires 8, 10 et 12 sont maintenues par une pression axiale entre le flasque 52 appartenant au bâti 44 et une base 66 fixée solidairement au bâti par un moyen de fixation approprié.

Le transducteur électromécanique décrit ci-avant présente, à titre d'exemple, un diamètre d'environ 7 mm et une longueur selon l'axe de rotation 6 d'environ 20 mm. Ce transducteur est agencé de manière compacte et est formé uniquement de pièces peu onéreuses, facilement réalisables de manière industrielle. De plus, l'assemblage des pièces polaires 8, 10 et 12 et du rotor 4 avec le bâti 44 ne présente aucune difficulté technique. En particulier, le positionnement des pièces polaires 8, 10 et 12 s'effectue aisément. On notera encore que le montage des bobines 32, 34 et 36 s'effectue également aisément, ces bobines étant montées respectivement sur les bras polaires 14, 16 et 18 avant l'assemblage des pièces polaires 8, 10 et 12 avec le bâti 44 du stator 2.

Selon un mode de réalisation non représenté, l'aimant permanent du rotor est un aimant multipolaire pouvant être situé à l'intérieur de l'ouverture statorique ou dans un plan voisin au plan 42 dans lequel s'étendent les épanouissements polaires 20, 22 et 24. En particulier, l'aimant multipolaire peut être situé en dessous du plan 42, du côté du corps allongé central. Dans le cas d'une aimantation axiale, une plaque magnétique de retour du flux magnétique peut être assemblée, si nécessaire, à l'aimant multipolaire ou être placée dans le fond du logement agencé dans le bâti 44 pour le rotor 4. On remarquera encore que le profil des épanouissements polaires définissant le trou statorique peut être quelconque et par exemple définir un créneau circulaire.

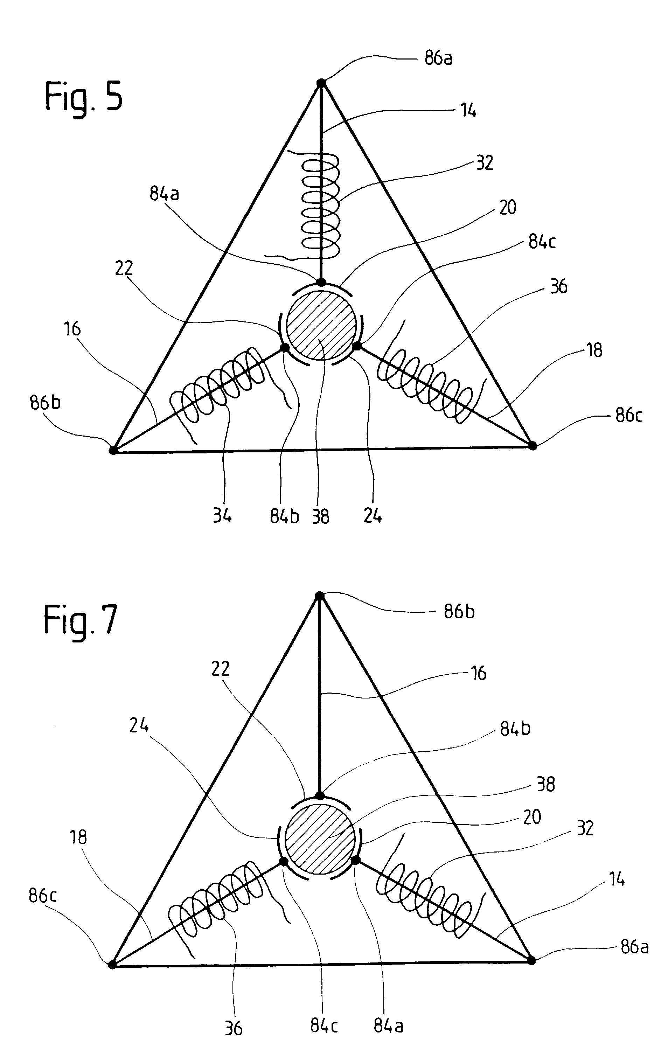

Sur la figure 5 a été représenté un schéma magnétique du transducteur électromécanique décrit ci-avant à l'aide des figures 1 à 4. Sur cette figure 5 ont été représentés schématiquement l'aimant permanent 38 du rotor 4, les trois épanouissements polaires 20, 22 et 24, les trois bras polaires 14, 16 et 18 et les trois bobines 32, 34 et 36.

Chacun des bras polaires 14, 16 et 18 est relié magnétiquement à une première extrémité 84a, respectivement 84b et 84c à l'épanouissement polaire 20, respectivement 22 et 24. Chacun des trois bras polaires 14, 16 et 18 a sa seconde extrémité 86a, respectivement 86b et 86c reliée aux secondes extrémités des deux autres bras polaires, comme cela est représenté schématiquement sur cette figure 5.

Dans le mode de réalisation décrit ci-avant, la liaison magnétique entre les secondes extrémités 86a, 86b et 86c est réalisée avantageusement par les trois oreilles de contact magnétiques 26, 28, 30 associées à l'anneau 64 de faible réluctance magnétique.

L'alimentation électrique des trois bobines 32, 34 et 36 est effectuée de manière classique par n'importe quelle commande appropriée à ce type de transducteur et connue de l'homme du métier. L'alimentation d'un transducteur électromécanique, présentant un schéma magnétique équivalent à celui représenté à la figure 5, est connue de l'homme du métier des transducteurs de petites dimensions, notamment du type horloger. Ainsi, l'alimentation électrique du transducteur électromécanique selon l'invention décrit ci-avant ne sera pas décrite en détail dans le présent document.

On notera cependant que le transducteur décrit ci-avant peut être utilisé dans un mode de fonctionnement synchrone ou dans un mode de fonctionnement pas à pas, suivant le type d'alimentation choisi. Dans le cas d'un mode de fonctionnement pas à pas, il est possible de prévoir dans les épanouissements polaires 20, 22 et 24 des encoches de positionnement.

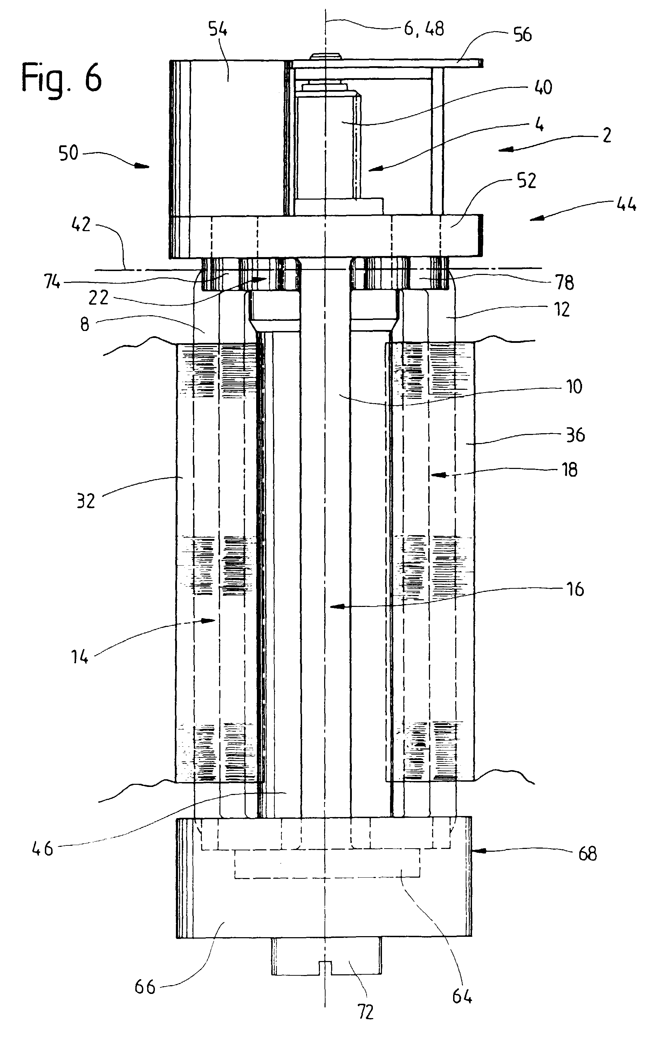

Sur la figure 6 est représenté un transducteur électromécanique biphasé selon l'invention.

Ce transducteur électromécanique biphasé se distingue du transducteur électromécanique triphasé décrit ci-avant uniquement par le fait qu'il ne comporte que deux bobines d'alimentation 32 et 36 et que, par conséquent, l'un 16 des bras polaires ne porte aucune bobine. Etant donné que ce mode de réalisation d'un transducteur électromécanique selon l'invention est de construction identique au transducteur électromécanique triphasé décrit à l'aide des figures 1 à 4, les références de la figure 6 ne seront pas à nouveau décrites ici en détail.

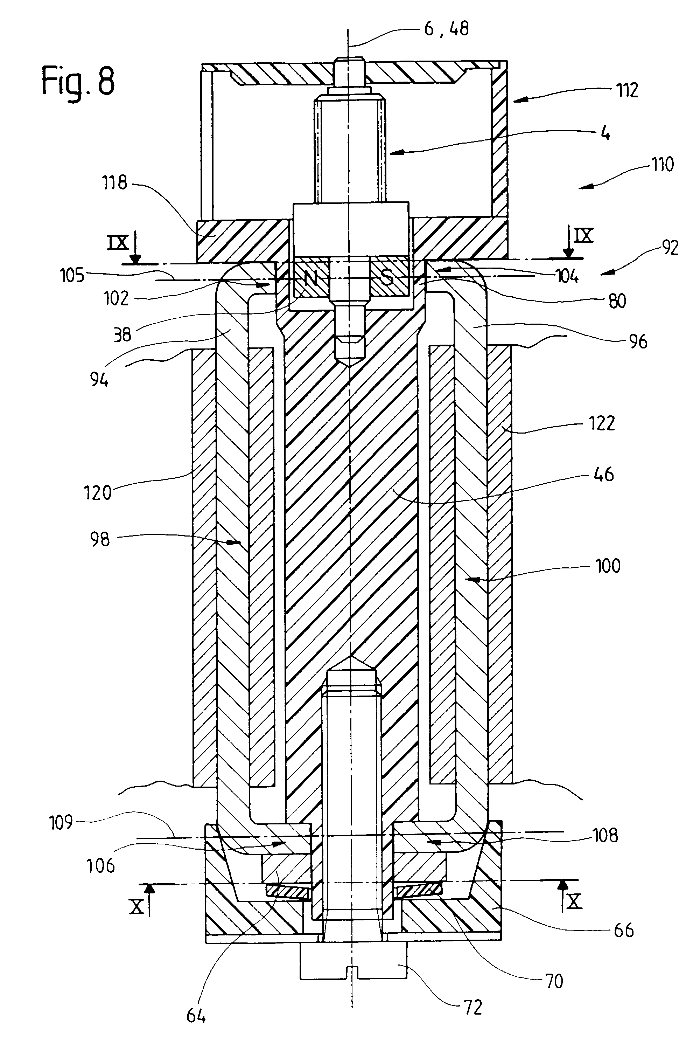

Sur la figure 7 est représenté le schéma magnétique du transducteur électromécanique biphasé représenté à la figure 6. Comme cela vient d'être mentionné, la seule différence avec le schéma magnétique du transducteur électromécanique triphasé décrit ci-avant à l'aide de la figure 5 réside dans le fait que ce transducteur électromécanique est pourvu uniquement de deux bobines 32 et 36. Différents types d'alimentation de transducteur biphasé ayant un schéma magnétique correspondant à celui représenté à la figure 7 sont connus de l'homme du métier, notamment de l'homme du métier des transducteurs du type horloger. Les références mentionnées sur la figure 7 et déjà décrites précédemment ne seront pas à nouveau décrites ici.

Le transducteur électromécanique biphasé représenté à la figure 6 peut être alimenté dans un mode synchrone ou dans un mode pas à pas. Dans ce dernier cas, il est prévu de manière avantageuse des encoches de positionnement dans les épanouissements polaires 20, 22 et/ou 24, l'agencement de ces encoches de positionnement étant connu de l'homme du métier.

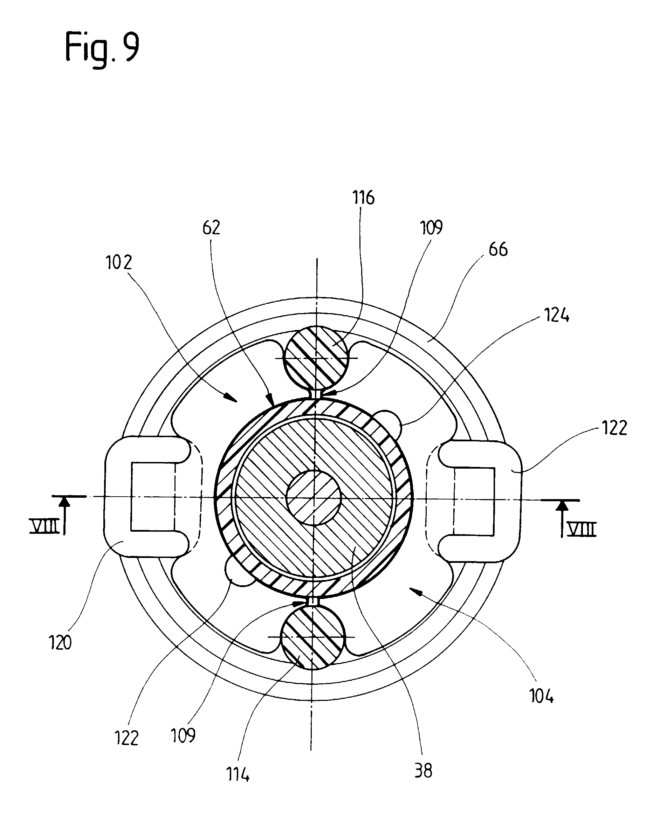

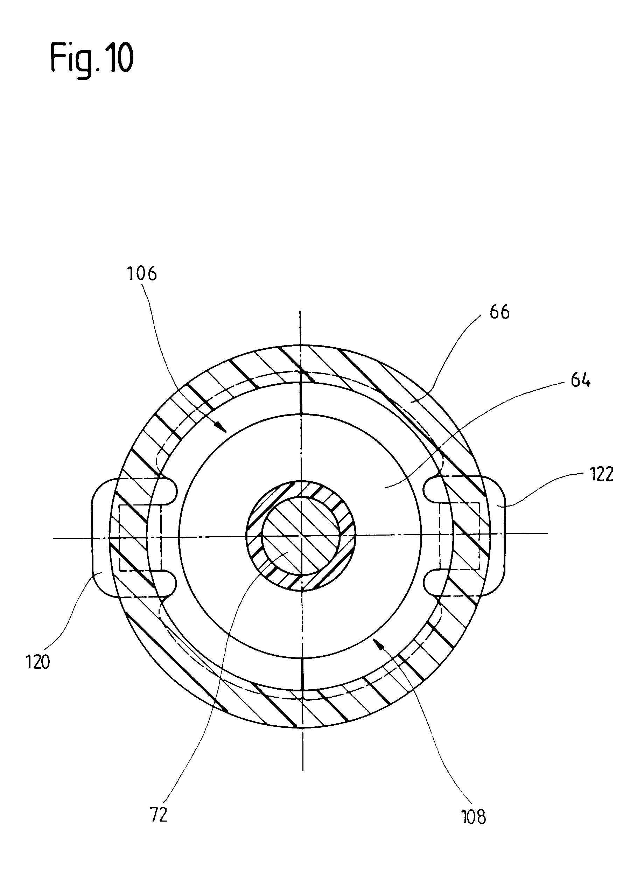

En se référant ci-après aux figures 8 à 10, on décrira un transducteur électromécanique monophasé selon l'invention.

Ce transducteur monophasé comprend un rotor 4, susceptible de tourner autour d'un axe de rotation 6, et un stator 92 comprenant une première pièce polaire 94 et une deuxième pièce polaire 96. Chacune de ces pièces polaires 94 et 96 est formée par un bras polaire 98, respectivement 100, un épanouissement polaire 102, respectivement 104, s'étendant dans un plan 105 perpendiculaire à l'axe de rotation 6 du rotor 4, et une oreille de contact magnétique 106, respectivement 108.

Les épanouissements polaires 102 et 104 sont séparés l'un de l'autre par deux entrefers 109 formant deux zones à haute réluctance magnétique.

Les deux oreilles de contact magnétique 106 et 108 sont reliées magnétiquement entre elles à l'aide d'un anneau 64 de faible réluctance magnétique.

Le stator 92 comporte en outre un bâti 110 comprenant une cage 112 équivalente à la cage 50 des modes de réalisation biphasé et triphasé décrits ci-avant. De plus, le bâti 110 comprend un corps allongé central 46, une base 66 et une vis de fixation 72, servant à fixer cette base 66 au corps central 46, identiques aux modes de réalisation biphasé et triphasé décrits ci-avant.

L'anneau de faible réluctance magnétique 64 est à nouveau appliqué contre les oreilles de contact magnétiques 106 et 108 à l'aide d'un anneau élastique 70 formant ressort. Les pièces polaires 94 et 96, en particulier les épanouissements polaires 102 et 104, sont positionnées et maintenues en position à l'aide de deux goupilles 114 et 116 logées dans des encoches prévues à cet effet dans les épanouissements polaires 102 et 104, ces goupilles 114 et 116 faisant saillie du flasque 118 de la cage 112 de manière équivalente aux modes de réalisation décrits précédemment. Le flasque 118 est relié matériellement au corps central 46 par un anneau 80 prévu entre l'aimant 38 du rotor 4 et les épanouissements polaires 102 et 104.

Chacun des deux bras polaires 98 et 100 porte une bobine 120, respectivement 122. Ces bras polaires 98 et 100 présentent une orientation parallèle à l'axe de rotation 6 du rotor 4, lequel est confondu avec l'axe central 48 du corps allongé central 46.

L'alimentation électrique des bobines 120 et 122 peut être effectuée de manière classique, soit en série, soit en parallèle.

On notera ici qu'il est également possible de prévoir une variante de ce mode de réalisation (non-représentée) avec une seule bobine portée par l'un des deux bras polaires 98 ou 100. Cependant, la variante représentée sur la figure 8 avec deux bobines 120 et 122 est plus avantageuse pour ce qui concerne l'encombrement du transducteur, ceci étant donné que pour un même flux engendré dans les pièces polaires 94 et 96 sous une alimentation électrique donnée, les deux bobines 120 et 122 présentent chacune une dimension inférieure à la dimension résultante pour une seule bobine portée par l'un des deux bras polaires 98 ou 100. Par contre, la réalisation avec une seule bobine est moins onéreuse.

Le transducteur électromécanique monophasé décrit ici est particulièrement adapté à un mode de fonctionnement pas à pas. De manière classique, il est prévu dans les épanouissements polaires 102 et 104 deux encoches de positionnement 122 et 124 servant à positionner l'aimant permanent bipolaire 38 du rotor 4 dans deux positions de repos avantageuses pour le fonctionnement de ce transducteur monophasé.

## Revendications

1. Transducteur électromécanique comprenant un stator (2; 92) et un rotor (4) susceptible de tourner autour d'un axe de rotation (6) et comportant un aimant permanent (38), ledit stator comprenant des moyens de couplage magnétique (8, 10, 12, 64; 94, 96) servant à coupler magnétiquement au moins une première bobine (32; 120) audit aimant permanent, ces moyens de couplage magnétique comprenant :
- un premier épanouissement polaire (20; 102) et un deuxième épanouissement polaire (24; 104) définissant chacun partiellement un trou statorique (62) traversé par ledit rotor (4), ces premier et deuxième épanouissements polaires étant séparés l'un de l'autre par des zones à haute réluctance magnétique (31; 109),
- un premier bras polaire (14; 98) et un deuxième bras polaire (18; 100) ayant chacun une première extrémité et une seconde extrémité, ces premier et deuxième bras polaires ayant leurs dites premières extrémités reliées magnétiquement, et respectivement, audit premier épanouissement polaire et audit deuxième épanouissement polaire et ayant leurs dites secondes extrémités reliées magnétiquement l'une à l'autre,
lesdits premier et deuxième bras polaires étant orientés dans une direction parallèle audit axe de rotation, ladite première bobine étant portée par ledit premier bras polaire, ledit stator comprenant en outre un bâti (44; 110) comportant un corps central allongé (46), ayant un axe central longitudinal (48) confondu avec ledit axe de rotation (6) dudit rotor (4), et comportant également un flasque (52; 118) solidaire dudit corps central et perpendiculaire audit axe central longitudinal, ledit transducteur étant caractérisé en ce que lesdits bras polaires et lesdits épanouissements polaires sont situés en-dessous de la surface supérieure (83) dudit flasque relativement audit corps central, lesdits épanouissements polaires étant en appui axial contre une surface (81) de ce flasque.

2. Transducteur selon la revendication 1, caractérisé en ce que ledit stator (2; 92) comporte en outre une deuxième bobine (36; 122) portée par ledit deuxième bras polaire (18;100).

3. Transducteur selon la revendication 2, caractérisé en ce que lesdits moyens de couplage magnétique (8, 10, 12, 64) comportent en outre un troisième épanouissement polaire (22), définissant partiellement ledit trou statorique (62), et un troisième bras polaire (16) ayant une première extrémité reliée magnétiquement audit troisième épanouissement polaire et une seconde extrémité reliée magnétiquement auxdites secondes extrémités desdits premier et deuxième bras polaires (14, 18), ledit troisième bras polaire étant orienté dans une direction parallèle audit axe de rotation (6) dudit rotor (4).

4. Transducteur selon la revendication 3, caractérisé en ce que ledit stator comporte une troisième bobine (34) portée par ledit troisième bras polaire (16) et couplée magnétiquement audit aimant permanent (38) par lesdits moyens de couplage magnétique (8, 10, 12, 64).

5. Transducteur selon la revendication 1 ou 2, caractérisé en ce que lesdits premier et deuxième épanouissements polaires s'étendent dans un même premier plan (42; 105) perpendiculaire audit axe de rotation (6).

6. Transducteur selon la revendication 5 et la revendication 3 ou 4, caractérisé en ce que ledit troisième épanouissement polaire s'étend dans ledit premier plan (42).

7. Transducteur selon l'une quelconque des revendications précédentes, caractérisé en ce que ledit aimant permanent (38) présente une magnétisation radiale, cet aimant étant situé au moins partiellement à l'intérieur dudit trou statorique (62), ledit corps central (46) ayant, à une première extrémité, une partie annulaire (80) définissant un évidement, ledit aimant étant au moins partiellement logé à l'intérieur de cet évidemment, ladite partie annulaire formant une partie intermédiaire de liaison matérielle entre ledit corps central (46) et ledit flasque (52; 118), lesdits épanouissements polaires (20, 22, 24; 102, 104) étant au moins partiellement agencés contre la face externe de ladite partie annulaire (80).

8. Transducteur selon la revendication 7, caractérisé en ce qu'il comprend en outre une base (66) fixée à une seconde extrémité dudit corps central (46) par des premiers moyens de fixation (72), cette base exerçant une pression sur lesdites secondes extrémités desdits bras polaires (14, 16, 18; 98, 100) de manière à maintenir axialement ces bras polaires et lesdits épanouissements polaires (20, 22, 24; 102, 104).

9. Transducteur selon la revendication 8, caractérisé en ce que lesdits bras polaires (14, 16, 18; 98, 100) et lesdits épanouissements polaires (20, 22, 24; 102, 104) sont maintenus radialement en place par des deuxièmes moyens de fixation (74, 76, 78; 114, 116) associés audit flasque ( 52; 118).

10. Transducteur selon l'une quelconque des revendications précédentes, caractérisé en ce que lesdites secondes extrémités desdits bras polaires (14, 16, 18; 98, 100) sont reliées magnétiquement à des oreilles de contact magnétiques respectives (26, 28, 30; 106, 108), appartenant auxdits moyens de couplage magnétiques (8, 10, 12, 64), situées essentiellement dans un deuxième plan (61; 109)perpendiculaire audit axe de rotation (6) dudit rotor (4), lesdites oreilles de contact magnétiques étant reliées magnétiquement entre elles par un anneau (64) de faible réluctance magnétique, appartenant auxdits moyens de couplage magnétique, disposés en appui contre ces oreilles de contact magnétique.

11. Transducteur selon la revendication 10, caractérisé en ce que chacun desdits bras polaires (14, 16, 18; 98, 100) forme avec ledit épanouissement polaire respectif (20, 22, 24; 102, 104) et ladite oreille de contact magnétique respective (26, 28, 30; 106, 108) une seule et même pièce polaire (8, 10, 12; 94, 96).

## Patentansprüche

1. Elektromechanischer Wandler, umfassend einen Stator (2; 92) und einen Rotor (4), der um eine Rotationsachse (6) drehbar ist und einen Permanentmagnet (38) umfaßt, welcher Stator magnetische Kopplungsmittel (8, 10, 12, 64; 94, 96) aufweist, die dazu dienen, mindestens eine erste Spule (32; 120) mit dem Permanentmagneten magnetisch zu koppeln, welche magnetischen Kopplungsmittel umfassen:
- einen ersten Polschuh (20; 102) und einen zweiten Polschuh (24; 104), welche jeweils teilweise ein Statorloch (62) begrenzen, das von dem Rotor (4) durchsetzt ist, welcher erste und zweite Polschuh voneinander durch Zonen hoher magnetischer Reluktanz (31; 109) getrennt sind;
- einen ersten Polarm (14; 98) und einen zweiten Polarm (18; 100) mit jeweils einem ersten und einem zweiten Ende, welche ersten und zweiten Polarme mit ihren ersten Enden magnetisch mit dem ersten Polschuh bzw. zweiten Polschuh verbunden sind und mit ihren zweiten Enden magnetisch miteinander verbunden sind,
welcher erste und zweite Polarm in einer Richtung parallel zu der Rotationsachse orientiert sind, wobei die erste Spule von dem ersten Polarm getragen ist, welcher Stator ferner ein Gestell (44; 110) aufweist mit einem langgestreckten zentralen Korpus (46) mit einer zentralen Längsachse (48), die mit der Rotationsachse (6) des Rotors (4) zusammenfällt, und außerdem einen Flansch (52; 118) aufweist, verbunden mit dem Zentralkorpus und senkrecht zur zentralen Längsachse, welcher Wandler dadurch gekennzeichnet ist, daß die Polarme und die Polschuhe unter der oberen Oberfläche (83) des Flansches relativ zu dem zentralen Korpus angeordnet sind, wobei die Polschuhe axial an einer Oberfläche (81) dieses Flansches anliegen.

2. Wandler nach Anspruch 1, dadurch gekennzeichnet, daß der Stator (2; 92) ferner eine zweite Spule (36; 122), getragen von dem zweiten Polarm (18; 100) umfaßt.

3. Wandler nach Anspruch 2, dadurch gekennzeichnet, daß die magnetischen Kopplungsmittel (8, 10, 12, 64) ferner einen dritten Polschuh (22), der teilweise das Statorloch (62) begrenzt, sowie einen dritten Polarm (16) umfassen, der mit einem ersten Ende magnetisch mit dem dritten Polschuh und mit einem zweiten Ende magnetisch mit den zweiten Enden des ersten und des zweiten Polarms (14, 18) verbunden ist, welcher dritte Polarm in einer Richtung parallel zur Rotationsachse (6) des Rotors (4) orientiert ist.

4. Wandler nach Anspruch 3, dadurch gekennzeichnet, daß der Stator eine dritte Spule (34), getragen von dem dritten Polarm (16) und magnetisch mit dem Permanentmagneten (38) über die magnetischen Kopplungsmittel (8, 10, 12, 64) gekoppelt, umfaßt.

5. Wandler nach Anspruch 1 oder 2, dadurch gekennzeichnet, daß der erste und der zweite Polschuh sich in derselben ersten Ebene (42; 105) senkrecht zur Rotationsachse (6) erstrecken.

6. Wandler nach Anspruch 5 und Anspruch 3 oder 4, dadurch gekennzeichnet, daß der dritte Polschuh sich in der ersten Ebene (42) erstreckt.

7. Wandler nach einem der vorangehenden Ansprüche, dadurch gekennzeichnet, daß der Permanentmagnet (38) eine radiale Magnetisierung aufweist, welcher Magnet sich mindestens teilweise im Inneren des Statorloches (62) befindet, wobei der Zentralkorpus (46) an einem ersten Ende eine ringförmige Partie (80), die eine Ausnehmung begrenzt, aufweist, in deren Inneren der Magnet mindestens teilweise aufgenommen ist, welche ringförmige Partie eine materielle Zwischenverbindungspartie zwischen dem Zentralkorpus (46) und dem Flansch (52; 118) bildet, wobei die Polschuhe (20, 22, 24; 102, 104) mindestens teilweise gegen die Außenseite der ringförmigen Partie (80) anliegend ausgebildet sind.

8. Wandler nach Anspruch 7, dadurch gekennzeichnet, daß er ferner eine Basis (66) umfaßt, die mittels erster Befestigungsmittel (72) an einem zweiten Ende des Zentralkorpus (46) befestigt ist, welche Basis einen Druck auf die zweiten Enden der Polarme (14, 16, 18; 98, 100) derart ausübt, daß diese Polarme und die Polschuhe (20, 22, 24; 102, 104) in Axialrichtung gehalten sind.

9. Wandler nach Anspruch 8, dadurch gekennzeichnet, daß die Polarme (14, 16, 18; 98, 100) und die Polschuhe (20, 22, 24; 102, 104) radial an Ort und Stelle mittels zweiter Befestigungsmittel (74, 76, 78; 114, 116), zugeordnet dem Flansch (52; 118), gehalten sind.

10. Wandler nach einem der vorangehenden Ansprüche, dadurch gekennzeichnet, daß die zweiten Enden der Polarme (14, 16, 18; 98, 100) magnetisch mit entsprechenden magnetischen Kontaktfortsätzen (26, 28, 30; 106, 108) verbunden sind, die zu den magnetischen Kopplungsmitteln (8, 10, 12, 64) gehören, welche im wesentlichen in einer zweiten Ebene (61; 109) senkrecht zu der Rotationsachse (6) des Rotors (4) angeordnet sind, welche magnetischen Kontaktfortsätzen magnetisch miteinander durch einen Ring (64) geringer magnetischer Reluktanz verbunden sind, der zu den magnetischen Kopplungsmitteln gehört und in Anlage an den magnetischen Kontaktfortsätzen angeordnet ist.

11. Wandler nach Anspruch 10, dadurch gekennzeichnet, daß jeder der Polarme (14, 16, 18; 98, 100) mit dem jeweiligen Polschuh (20, 22, 24; 102, 104) und dem jeweiligen magnetischen Kontaktfortsätzen (26, 28, 30; 106, 108) ein- und dasselbe Polstück (8, 10, 12; 94, 96) bildet.

## Claims

1. Electromechanical transducer comprising a stator (2; 92) and a rotor (4) capable of turning around a rotation axis (6) and including a permanent magnet (38), said stator comprising magnetic coupling means (8, 10, 12, 64; 94, 96) serving to couple magnetically at least a first winding (32; 120) to said permanent magnet, said magnetic coupling means comprising :
- a first polar expansion (20; 102) and a second polar expansion (24; 104) each partially defining a stator hole (62) traversed by said rotor (4), such first and second polar expansions being separated from one another by zones (31; 109) of high magnetic reluctance,
- a first polar arm (14; 98) and a second polar arm (18; 100) each having a first end and a second end, such first and second polar arms having their said first ends magnetically coupled respectively to said first polar expansion and to said second polar expansion and having their second ends magnetically coupled to one another,
said first and second polar arms being oriented in a direction parallel to said rotation axis, said first winding being borne by said first polar arm, said stator furthermore comprising a mounting (44; 110) including an elongated central body (46) having a longitudinal central axis (48) merged with said rotation axis (6) of said rotor (4) and also including an end flange (52; 118) integral with said central body and perpendicular to said longitudinal central axis, said transducer being characterized in that said polar arms and said polar expansions are located below the upper surface (83) of said flange relative to said central body, said polar expansions bearing axially against a surface (81) of such flange.

2. Transducer according to claim 1, characterized in that said stator (2; 92) further includes a second winding (36; 122) borne by said second polar arm (18; 100).

3. Transducer according to claim 2, characterized in that said magnetic coupling means (8, 10, 12, 64) further include a third polar expansion (22) partially defining said stator hole (62) and a third polar arm (16) having a first end magnetically coupled to said third polar expansion and a second end magnetically coupled to said second ends of said first and second polar arms (14, 18), said third polar arm being oriented in a direction parallel to said rotation axis (6) of said rotor (4).

4. Transducer according to claim 3, characterized in that said stator includes a third winding (34) borne by said third polar arm (16) and magnetically coupled to said permanent magnet (38) by said magnetic coupling means (8, 10, 12, 64).

5. Transducer according to claim 1 or 2, characterized in that said first and second polar expansions extend in a first common plane (42; 105) perpendicular to said rotation axis (6).

6. Transducer according to claim 5 and claim 3 or 4, characterized in that said third polar expansion extends in said first plane (42).

7. Transducer according to any one of the preceding claims, characterized in that said permanent magnet (38) exhibits radial magnetization, such magnet being located at least partially in the interior of said stator hole (62), said central body (46) having an annular portion (80) defining a cavity at a first end, said magnet being at least partially housed in the interior of such cavity, said annular portion forming an intermediate material coupling portion between said central body and said flange (52; 118), said polar expansions (20, 22, 24; 102, 104) being at least partially arranged against the external face of said annular portion (80).

8. Transducer according to claim 7, characterized in that it further comprises a base (66) fixed to a second end of said central body (46) by first securing means (72), such base exerting a pressure on said second ends of said polar arms (14, 16, 18; 98, 100) so as to maintain axially such polar arms and said polar expansions (20, 22, 24; 102, 104).

9. Transducer according to claim 8, characterized in that said polar arms (14, 16, 18; 98, 100) and said polar expansions (20, 22, 24; 102, 104) are radially maintained in place by second securing means (74, 76, 78; 114, 116) associated with said flange (52; 118).

10. Transducer according to any one of the preceding claims, characterized in that said second ends of said polar arms (14, 16, 18; 98, 100) are magnetically coupled to respective magnetic contact lugs (26, 28, 30; 106, 108) belonging to said magnetic coupling means (8, 10, 12, 64) and basically located in a second plane (61; 109) perpendicular to said rotation axis (6) of said rotor (4), said magnetic contact lugs being magnetically coupled among themselves by a ring (64) of low magnetic reluctance belonging to said magnetic coupling means and arranged to bear against such magnetic contact lugs.

11. Transducer according to claim 10, characterized in that each of said polar arms (14, 16, 18; 98, 100) together with said respective polar expansions (20, 22, 24; 102, 104) and said respective magnetic contact lugs (26, 28, 30; 106, 108) forms a single common pole piece (8, 10, 12; 94, 96).
